**Europäisches Patentamt**

**European Patent Office**

**Office européen des brevets**

(19)

(11) Veröffentlichungsnummer: **0 281 628 B1**

# EUROPÄISCHE PATENTSCHRIFT

(12)

(45) Veröffentlichungstag der Patentschrift:
27.02.91 Patentblatt 91/09

(51) Int. Cl.⁵: **B01D 3/30**, B01D 3/26, B01D 45/12

(21) Anmeldenummer: 86907012.8

(22) Anmeldetag: 16.09.86

(86) Internationale Anmeldenummer:
**PCT/SU86/00085**

(87) Internationale Veröffentlichungsnummer:
**WO 88/01894 24.03.88 Gazette 88/07**

(54) **KONTAKT-TRENNELEMENT.**

(43) Veröffentlichungstag der Anmeldung:
14.09.88 Patentblatt 88/37

(45) Bekanntmachung des Hinweises auf die
Patenterteilung:
27.02.91 Patentblatt 91/09

(84) Benannte Vertragsstaaten:
DE FR GB IT SE

(56) Entgegenhaltungen:
GB-A- 1 123 546
SU-A- 330 875
SU-A- 475 160
SU-A- 611 631

(73) Patentinhaber: UKRAINSKY
NAUCHNO-ISSLEDOVATELSKY INSTITUT
PRIRODNYKH GAZOV 'UKRNIIGAZ'
Krasnoshkolnaya nab., 20
Kharkov, 310125 (SU)

(72) Erfinder: KISELEV, Viktor Mikhailovich
ul. Komandarma Uborevicha, 22-64
Kharkov, 310144 (SU)

(74) Vertreter: Lehn, Werner, Dipl.-Ing. et al
Hoffmann, Eitle & Partner Patentanwälte
Arabellastrasse 4
D-8000 München 81 (DE)

**Beschreibung**

Die Erfindung bezieht sich auf den chemischen Maschinenbau und betrifft insbesondere die Stoffaustauschtechnik und genauer ein Kontaktscheideelement.

Zur Zeit besteht ein Problem der Produktivitätssteigerung, der Metallaufwandsenkung sowie der Zuverlässigkeits- und Effektivitätserhöhung der Prozesse des Wärmeund Stoffaustausches und der Phasentrennung. Da die Stoffaustauschkolonnen und Gasflüssigkeitsscheider Hauptapparate für Gasaufbereitungs- und verarbeitungsprozesse sind, so bahnt die Lösung des obengenannten Problems den Weg zur Schaffung kompakter kleinanlagen vom Typ mini-GVW (Miniatur-Gasverarbeitungswerke) für Erdöl- und Gasvorkommen des Kontinentalschelfes und der jenseits des Polarkreises befindlichen Regionen, wo auf kleine Gewichte, geringe Außenmaße und hohe spezifische Leistungen der Ausrüstungen besonderen Wert gelegt wird.

Es ist ein Wirbelkontaktelement (SU-Urheberschein Nr. 330875, Int. C1 B OI d 3/30) bekannt, dessen Wirkungs weise auf der Ausnutzung einer verwirbelten Strömung beruht. Es enthält einen vertikalen Körper, innerhalb dessen kurze Zylinderstutzen untergebracht sind, die mit Axialwirblern am Eintrittsende und hohlen Fliehkraftabscheidern am Austrittsende versenen sind. Zur Zuführung und Ableitung der Flüssigkeit sind zentrale Überlaufrohre vorhanden. Das Hauptarbeitsorgan im bekannten Element ist ein feststehender Mehrschaufelaxialwirbler, welcher dem diesen durchfließenden Gasstrom die Drehbewegung erteilt. Um einen genügend intensiven Stoffaustausch zu sichern, werden in solchen Elementen verwickelte Wirbler mit gelochten Hohlschaufeln eingesetzt.

Eine solche Vorrichtung ist jedoch in bezug auf den Apparatendurchmesser begrenzt, falls ein Mehrelementenboden zum Einsatz kommt, weil mit Vergrößerung der Anzahl der Elemente deren gleichmäßige Funktion gestört wird und infolge dessen die Intensität des Stoffüberganges sinkt.

Weiterhin ist ein Kontaktscheideelement (SU-Urheberschein Nr. 475160, Int. C1. B OI d 3/30) bekannt, das einen in seinem Unterteil über den gesamten Umfang gelochten Stutzen mit einem im Lochbereich am Eingang angeordneten Mehrschaufelaxialwirbler und einem am Ausgang befindlichen hohlen Abscheider enthält, wobei an der Außenwand des Stutzens zwischen dem Wirbler und dem Abscheider eine ringförmige Trennwand angebracht ist.

Mit einer solchen Ausführung des Kontaktelementes können die technisch-wirtschaftlichen Kennziffern eines mit hoher Geschwindigkeit betriebenen Mehrelementenstoffaustauschapparates im Vergleich zum obenerwahnten erheblich verbessert werden.

Das bekannte Kontaktelement weist jedoch eine begrenzte Intersität des Stoffaustausches auf und ist nicht imstande, eine wirkungsvolle Abscheidung kleiner Flüssigkeitstropfen zu bewirken.

Der Erfindung liegt die Aufgabe zugrunde, ein Kontaktscheideelement zu schaffen, bei dem aufgrund der baulichen Gestaltung des Axialwirblers die hohe Intensität der Wärme- und Stoffaustauschvorgange und der Abscheidung feinst verteilter Flüssigkeitstropfen aus dem Gasstrom gewanrleistet werden könnte.

Das wesen der Erfindung besteht darin, daß bei einem einem Wirbelboden von Gas-Flüssigkeitsapparaten zugenörigen Kontaktscheideelement, enthaltend einen Stutzen, an dessen Eintrittsende mindestens eine Reihe von Umfangslöchern ausgeführt ist, einen innerhalb des Stutzens eingebauten Axialwirbler mit mindestens zwei geneigten Schaufeln und einen am Austrittsende des Stutzens angeordneten Abscheider, erfindungsgemäß vor jeder geneigten Schaufel des Axialwirblers eintrittsendseitig eine geradlinige, längs der Achse des Stutzens verlaufende Rippe angebracht ist und zwischen jedem Paar der geradlinigen Rippen mindestens eine Zwischenrippe Vorhanden ist, während die Reihe von Umfangslöchern im Anordnungsbereich der geradlinigen Rippen ausgeführt ist.

Eine solche bauliche Gestaltung des Kontaktscheideelementes sichert eine wesentliche Intensität der Wärme und Stoffaustauschvorgänge in Gas-Flüssigkeits-systemen durch die Vergrößerung der Phasenkontaktfläche aufgrund der vorangehenden Zerstäubung der Flüssigkeit in einem dichten geradlinigen Gitter, gebildet durch die vor den geneigten Schaufeln des Axialwirblers angebrachten Rippen sowie aufgrund schiefer Stöße der Flüssigkeitstropfen auf die geneigten Schaufeln des Axialwirblers.

Außerdem gewährleistet die erfindungsgemäße Ausführung des Kontaktscheideelementes, daß beim Abscheiden Kleine Flüssigkeitstropfen durch die Rückumlaufberieselung des durch die Flüssigkeit aufgefangenen Ausgangsgemisches im Durchflußteil des Axialwirblers zur hydrodynamischen Koagulierung gebracht werden können.

Vorteilhaft ist, die geradlinigen Rippen mit ihrer Kante dicht an die den geneigten Schaufeln anstoßend auszuführen und die den geneigten Schaufeln zugewandte Kante der Zwischenrippen gegenüber den an die geneigten Schaufeln anstoßenden Kanten der geradlinigen Rippen in Richtung des Eintrittsendes des Axialwirblers um mindestens eine Dicke der Zwischenrippe zu versetzen.

Dadurch kann die Höhe des Kontaktscheideelementes vermindert werden, indem das Gas gleichmäßig zwischen den Schaufeln unter zusatzlicher Verwirbelung des Stromes hinter den Zwischenrippen durchfließt, was seinerseits den Wärme- und Stoffaustausch verstärkt.

Ebenso vorteilhaft ist, daß die geradlinigen Rippen mit ihrer Kante dicht an die geneigten Schaufeln anstoßend ausgeführt sind, während die den geneigten Schaufeln zugewandte Kante der Zwischenrippen eine Abschrägung aufweist, die in einem spitzen Winkel zur Längsachse der Zwischenrippen in Neigungsrichtung der geneigten Schaufeln verläuft.

Diese konstruktive Ausführung hat den Vorteil einer gleichmäßigen Durchströmung des Gases zwischen den Schaufeln bei verminderten hydraulischen Verlusten.

Zweckmäßigerweise können die geradlinigen und die Zwischenrippen in einem Abstand von nicht größer als der Durchmesser des Stutzens von den geneigten Schaufeln angeordnet sein.

In diesem Fall wird die maximal nützliche Phasenkontaktfläche erreicht, was zum Anstieg der Wirksamkeit des Wärme- und Stoffaustausches beiträgt. Die Erhöhung des Abstandswertes über den einzigen Durchmesser ist aber ungünstig, weil dies zur erwünschten Intensivierung des Prozesses nicht mehr führen wird.

Zweckmäßigerweise können die geradlinigen und die Zwischenrippen in radialer Richtung im wesentlichen bis hin zur Innenfläche des Stutzens vorstehen und eine axiale Länge haben, die mindestens einem Viertel der axialen Länge der geneigten Schaufeln gleich ist, wobei die geradlinigen und Zwischenrippen über die Innenfläche des Stutzens gleichmäßig verteilt sind.

Eine solche Konstruktive Ausführung erlaubt es, den Durchflußteil des Axialwirblers zur Intensivierung der Prozesse vollstandiger auszunutzen, weil mit der Abnahme des hydraulischen Radius des Durchflußteils im Eintrittsbereich des Axialwirblers die Effektivität der Stoffübertragung steigt, während die gleichförmige Verteilung der Rippen über die Innenfläche des Stutzens zur gleichmäßigen Zufuhr der Flüssigkeit für den Kontakt mit dem Gas beiträgt. Dies gestattet es, die maximale Flüssigkeitsmenge durch das Kontaktscheideelement je zeiteinheit durchzuleiten, mit anderen Worten einen maximal zulässigen Flüssigkeitsdurchsatz zu sichern.

Zweckmäßigerweise können an den geradlinigen und den Zwischenrippen in der Höhenlage der Umfangslöcher radiale Ausschnitte bis in die Tiefe ausgebildet werden, die mindestens dem Durchmesser der Umfangslöcher gleich ist und daß jedes Umfangsloch gegenüber einer der Rippen angeordnet ist.

Eine solche bauliche Gestaltung ermöglicht aufgrund der zusätzlichen Verwirbelung der in Wechselwirkung stehenden Phasen die bestmögliche Zerstäubung der Flüssigkeit und die maximale Effektivität der Wärme- und Stoffaustauschvorgange.

Nachstehend wird die Erfindung anhand der eingehenden Beschreibung von deren konkreten Ausführungsbeispielen unter Bezugnahme auf Zeichnungen näher erläutert, in denen es zeigt :

Fig. I eine Prinzipanordnung des Kontaktscheideelementes (KSE) gemäß der Erfindung, in Langsschnitt ;

Fig. 2 den Schnitt nach Linie II-II der Fig. I durch die geneigten Schaufeln des Axialwirblers ;

Fig. 3 den Schnitt nach Linie III-III der Fig. I durch die geraden Rippen des Axialwirblers ;

Fig. 4 eine Ausführungsform des KSE mit zweistufigem Abscheider, in Längsschnitt durch die zusätzlichen Rippen ;

Fig. 5 die Abwicklung der Schaufeln und der Rippen des Axialwirblers ;

Fig. 6 eine Ausführungsform der Zwischenrippe mit abgeschragter Kante ;

Fig. 7 eine Ausführungsform der Zwischenrippen mit in Richtung auf das Eintrittsende des Axialwirblers versetzter Kante.

Das Kontaktscheideelement enthält einen kurzen senkrechten Stutzen I (Fig. I) mit einem Innendurchmesser D. An seinem Eintrittsende ist mindestens eine Reise von Umfangslöchern 2 ausgeführt. Innerhalb des Stutzens I ist ein Axialwirbler 3 eingebaut. Der wirbler 3 enthält eine Zentralhabe 4 mit mindestens zwei geneigten Schauteln 5 an seinem Austrittsende, während am Eintrittsende vor jeder geneigten schaufel 5 eintrittsendseitig eine geradlinige Rippe 6 angeordnet ist, die langs der Achse des Stutzens I verläuft. Darüber hinaus ist am Eintrittsende mindestens eine Zwischenrippe 7 vorgesehen. Die Zwischenrippe 7 ist zwischen jedem Paar der geradlinigen Rippen 6 angebracht. Im Anordnungsbereich der geradlinigen und der Zwischenrippen 6 bzw. 7 befindet sich die Reihe der Umfangslöcher 2. Der Axialwirbler 3 wird im Stutzen I unbewegbar, beispielsweise durch Punktschweißen 8, angebracht. Die geradlinigen und die Zwischenrippen 6 bzw. 7 sind in einem Abstand C von den geneigten Schaufeln 5 angeordnet. Der Abstand C ist nicht größer als der Durchmesser D des Stutzens I. Am Austrittsende des Stutzens I ist ein Abscheider 9 aufgesetzt, der im einfachsten Fall einen Mantel 10 enthält, welcher gegenüber dem Stutzen I koaxial angeordnet und mit einer Scheidewand II versehen ist. Der mantel 10 ist am Stutzen I, beispielsweise mittels eines stiftes 12 befestigt und bildet einen ringförmigen Durchgang 13. Das Austrittsende 14 des Stutzens I, die scheidewand II und die Innenfläche des Mantels 10 bilden eine Scheidungszone.

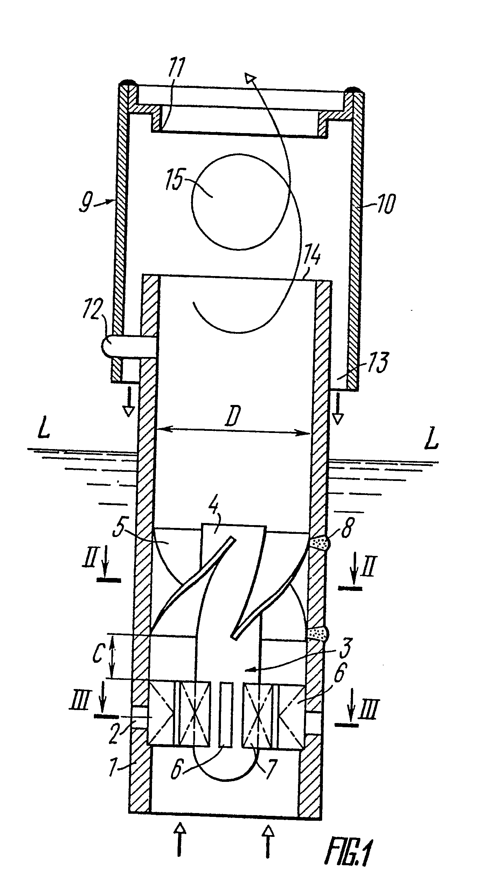

In Fig. 2 ist ein schnitt des KSE durch die geneigten Schaufeln 5 des Axialwirblers 3 dargestellt. In dieser Ausführungsform besitzt der Axialwirbler 3 vier geneigte schaufeln 5.

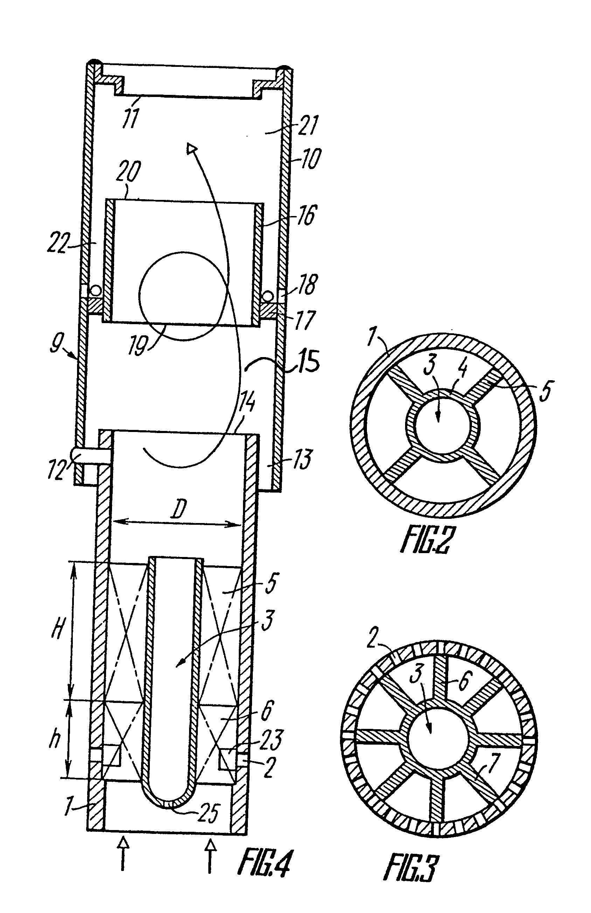

In Fig. 3 ist ein Schnitt des KSE durch die geradlinigen und die Zwischenrippen 6 bzw. 7 des Axialwirblers 3 gezeigt. In dieser Ausführungsform besitzt der Axialwirbler 3 vier geradlinige Rippen 6 und vier Zwischenrippen 7.

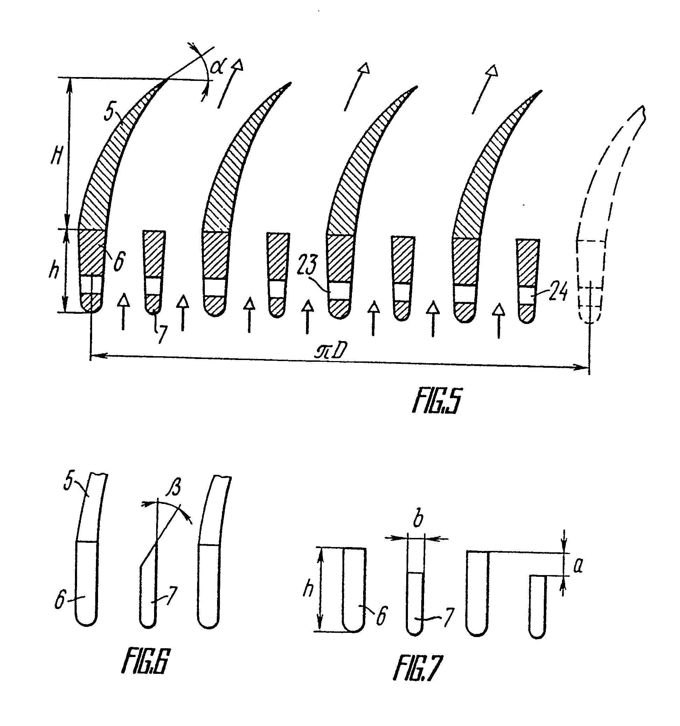

In Fig. 4 ist eine Ausführungsform der KSE mit zweistufigem Abscheider 9 dargestellt. Der Abscheider 9 weist einen zusätzlichen, zwischen dem Austrittsende 14 und der Scheidewand II koaxial angeordneten Stutzen 16 auf. Der Stutzen 16 ist am Mantel 10 mittels einer ringförmigen Trennwand 17 befestigt, über welcher im Mantel 10 Öffnungen 18 zum Ableiten der Flüssigkeit ausgeführt sind. Die untere Stirnfläche 19 des Stutzens 16 und das Austrittsende 14 des Stutzens I bilden die erste Scheidungszone 15. Die obere Stirnflächse 20 des Stutzens 16 und die Scheidewand II bilden die zweite Scheidungszone 21 mit einem ringförmigen Durchgang 22 zum Auffangen der abgeschiedenen Flüssigkeit. Die axiale Länge h der geradlinigen und der Zwischenrippen 6 bzw. 7 macht zumindest ein Viertel der axialen Länge H der geneigten Schaufeln 5 aus. Im Anordnungsbereich der Umfangslöcher 2 sind in den geradlinigen und den Zwischenrippen 6 bzw. 7 radiale Ausschnitte 23 bzw. 24 jeweils bis in die Tiefe ausgebildet, die mindestens dem Durchmesser der Umfangslöcher 2 gleich ist, wobei jedes Umfangsloch 2 gegenüber einer der Rippen 6 oder 7 angeordnet ist. Zum Ablauf der Flüssigkeit ist im Axialwirbler 3 eine Öffnung 25 vorgesehen.

In Fig. 5 ist die Abwicklung der Schaufeln 5 und der Rippen 6 und 7 des Axialwirblers 3 dargestellt. An die geneigten Schaufekn 5 stoßen die zusätzlichen, geradlinig angeordneten Rippen 6 an, zwischen denen sich die Zwischenrippen 7 mit radialen Ausschnitten 24 befinden. Der Austrittsbereich der geneigten Schaufel 5 ist zur Querschnittsfläche des KSE in einem Winkel α von 45° bis 75° orientiert.

In Fig. 6 ist eine Ausführungsform der Zwischenrippe 7 mit abgeschrägter Kante dargestellt. Ihre obere abgeschrägter Kante ist in einem Winkel β von 15° bis 45° abgeschnitten.

In Fig. 7 ist eine Ausführungsform der Zwischenrippen 7 mit einer um einen Wert a versetzten Kante abgebildet. Der Wert a beträgt eine bis drei Dicken b der Rippe 7.

Die Funktionsweise des Kontaktscheideelementes ist die folgende. Der Gasstrom tritt ins Element in axialer Richtung, wie es in Fig. I mit den Pfeilen angedeutet ist, ein und zerkleinert den Fluß der Flüssigkeit, die durch die Umfangslöcher 2 dem Bereich der Rippen 6 und 7 zuläuft. Um den ununterbrochenen Zulauf der Flüssigkeit durch die Umfangslöcher 2 hindurch zu sichern, muß für einen beständigen Flüssigkeitsspiegel LL gesorgt werden, der durch ein Abfkußsystem des waagerechten Bodens (in den Zeichnungen nicht gezeigt) aufrechterhalten wird. Die Flüssigkeitstropfen bewegen sich gemeinsam mit dem Gas in axialer Richtung und treffen auf die geneigten Schaufeln 5 des Axialwirblers 3. Nach dem Wirbler 3 bekommt der Gasflüssigkeitsstrom eine Drehbewegung, infolge deren ein Teil der Tropfen auf die Innenwand des Stutzens I ausfällt unter Ausbildung eines sich umdrehenden Flüssigkeitsfilmes, der unter Wirkung von Reibungskräften des Gasstromes auf der Filmoberfläche emporsteigt. In der Scheidungszone 15 erfolgt die endgültige Abscheidung der Flüssigkeitstropfen sowie des Flüssigkeitsfilmes vom Gas. Das abgeschiedene Gas passiert in verwirbeltem Strom die Scheidewand II, die das Mitreißen der Flüssigkeit verhindert, während die abgeschiedene Flüssigkeit über den ringförmigen Durchgang 13 auf den Flüssigkeitsspiegel LL auf dem waagerechten Boden abfkießt.

Beim Abscheiden von Gasflüssigkeitsgemischen wird der Axialwirbler 3 mit einem Gasflüssigkeitsgemisch beaufschlagt. In diesem Fall erfolgt dank der Berieselung über die Reihe von Umfangslöchern 2 die hydrodynamische Koagulierung feiner Tropfen durch 2 den Strom größerer Tropfen, die sich im Bereich der Rippen 6 und 7 bilden. Der Schleier der großen Tropfen im turbulenten Fluss trägt dazu bei, dass durch den Gasstrom eingebrachte feinere Tropfen sich auf ihnen unter Bildung vergrösserter Tropfen niederschlagen, also ähnlich dem Prozess, der in Venturirohren (turbulenten Venturi-Wäschern) verläuft.

Aufgrund der Zerstäubung der Flüssigkeit, der Beriesülung der Oberfläche der Rippen 6 und 7 sowie durch schiefe Stösse auf die geneigten Schaufeln 5 unter gleichzeitiger Bildung eines verwirbelten Gasflüssigkeitsstromes wird eine hohe Intensität der Wärme- und Stoffaustauschvorgänge zwischen dem Gas und der Flüssigkeit gewährleistet.

Die Vergrösserung des Abstandes C bis auf einen Wert grösser als der Durchmesser D des Stutzens I führt jedoch nicht zur weiteren Intensivierung der Wärme- und Stoffaustauschvorgänge, sondern trägt bloss zur Vergrösserung des Längsmasses des KSE bei.

Um eine sorgfältigere Phasentrennung herbeizuführen, wird das KSE mit einer zweistufigen Scheidungseinheit versehen (Fig. 4). Die Stoffaustausch- und Scheidungsvorgänge laufen in diesem Fall ebenso ab, wie dies oben beschrieben ist. In der zweiten Scheidungszone 21 geht die endgültige Abscheidung der Tropfen der Flüssigkeit vor sich, welche über den ringförmigen Durchgang 22 auf die ringförmige Trennwand 17 abfliesst und weiterhin durch die Öffnungen 18 aus dem KSE auf den Flüssigkeitsspiegel LL abgeleit t wird. Mittels der radialen Ausschnitte 23, 24 gelingt es, die in Wechselwirkung stehenden Gas- und Flüssigkeitsströme zusätzlich zu verwirbeln, was eine maximale Intensivierung des Wärme- und Stoffaustausches zwischen ihnen gewährleistet. Im Laufe des Betriebes kann von rückwärtigen Wirbelströmen die Flüssigkeit über den oberen offenen Rand des Axialwirblers 3 mitgeschleppt und dann über die Öffnung 25 nach dem Abstellen des Apparates abgeleitet werden.

Im Ausführungsfall des Axialwirblers 3 nach der Anordnung, die in Fig. 5 dargestellt ist, verhindert die obere linke (nach der Zeichnung) spitze Kante der Rippe 7 die Durchströmung des Gases, deswegen fließt links von der Rippe 7 weniger Gas als rechts durch. Dieser Umstand verringert ein wenig die Durchsatzleistung des KSE.

Zur gleichmäßigen Durchführung der Ströme ist eine Rippe 7 mit abgeschrägter Kante, wie in Fig. 6 ersichtlich ist, oder eine Rippe 7 mit um einen wert a versetzter Kante vorgesehen.

Die erfindungsgemäß vorgeschlagene Ausführung des Kontaktscheideelements gestattet ein kleinbauendes hochleistungsfähiges KSE zu schaffen, welches sich sowohl in einen separaten Körper, als auch in Körper in Betrieb stenender Stoffaustauschkolonnen und Gas-Flüssigkeitsscheider einbauen läßt mit dem Ziel, ihre Leistunsfänigkeit und Effektivität zu steigern.

Die vorliegende Erfindung ermöglicht die Schaffung eines hochleistungsfähigen KSE für kleinbauende Hochgeschwindigkeits - Stoffaustauschkolonnen und Gas-Flüssigkeitsscheider für verschiedene Industriezweige. Sie kann bei der Erdöl- und Erdgasgewinnung zur Apparatur-Ausstattung der Gasaufbereitungs- und Gasverarbeitungsprozesse, einschließlich der Prozesse der Gastrocknung mit Glykolen und seiner Reinigung mit Aminen von Schadstoffen sowie der Absorption, Desorption und Rektifikation von Kohlenwasserstoffsystemen, zur Abscheidung von Erdöl, Metnanol, Aminen oder Gaskondensat aus dem Gasstom verwendet werden.

In der chemischen Industrie kann die Erfindung bei den verschiedenartigsten Prozessen in Kombination mit anderen Kontaktscheidevorrichtungen für Gas-Flüssigkeits-Systeme und in der Wärme energie wirtschaft zur Wasserdampfkondensation oder zum Abscheiden der Wassertropfen aus dem Wasserdampf unter Hochdruck Anwendung finden.

**Ansprüche**

1. Kontaktscheideelement eines Wirbelbodens von Gas-Flüssigkeitsapparaten, enthaltend einen Stutzen (I), an dessen Eintrittsende mindestens eine Reihe von Umfangslöchern (2) ausgeführt ist, einen innerhalb des Stutzens (I) eingebauten Axialwirbler (3) mit mindestens zwei geneigten Schaufeln (5) und einen am Austrittsende des Stutzens (I) angeordneten Abscheider (9), dadurch **gekennzeichnet**, daß vor jeder geneigten Schaufel (5) des Axialwirblers (3) eintrittsendseitig eine geradlinige, langs der Achse des Stutzens (I) verlaufende Rippe (6) angeordnet ist und zwischen jedem Paar der geradlinigen Rippen (6) mindestens eine Zwischenrippe (7) vorhanden ist, während die Reihe von Umfangslöchern (2) im Anordnungsbereich der geradlinigen und der Zwischenrippen (6, 7) ausgeführt ist.

2. Kontaltscheideelement nach Anspruch I, dadurch **gekennzeichnet**, daß die geradlinigen Rippen (6) mit ihrer Kante dicht an die geneigten Schaufeln (5) anstoßend ausgeführt sind, während die den geneigten Schaufeln (5) zugewandte Kante der Zwichenrippen (7) gegenüber den an die geneigten Schaufeln (5) anstoßenden Kanten der geradlinigen Rippen (6) in Richtung auf das Eintrittsende des Axialwirblers (3) um mindestens die Dicke b der Zwischenrippe (7) versetzt ist.

3. Kontaktscheideelement nach Anspruch I, dadurch **gekennzeichnet**, daß die geradlinigen Rippen (6) mit ihrer Kante dicht an die geneigten Schaufeln (5) anstoßend ausgeführt sind, während die den geneigten Schaufeln (5) zugewandte Kante der Zwischenrippen (7) eine Abschragung aufweist, die in einem spitzen Winkel β zur Längsachse der Zwischenrippen (7) in Neigungsrichtung der geneigten Schaufeln (5) verläuft.

4. Kontaktscheideelement nach Anspruch I, dadurch **gekennzeichnet**, daß die geradlinigen und die Zwischenrippen (6, 7) in einem Abstand von nicht größer als ein durchmesser des Stutzens (I) von den geneigten Schaufeln (5) angeordnet sind.

5. Kontaktscheideelement nach einem beliebigen der Ansprüche I bis 4, dadurch **gekennzeichnet**, daß die geradlinigen und die Zwischenrippen (6, 7) in radialer Richtung im wesentlichen bis hin zur Innenfläche des Stutzens (I) vorstehen und eine axiale Länge haben, die mindestens einem Viertel der axialen Länge der geneigten Schaufeln (5) gleich ist, wobei die geradlinigen und die Zwischenrippen (6, 7) über die Innenfläche des Stutzens (I) gleichmäßig verteilt sind.

6. Kontaktscheideelement nach einem beliebigen der Ansprüche I bis 4, dadurch **gekennzeichnet**, daß an den geradlinigen und den Zwischenrippen (6, 7) in der Höhenlage der Umfangslöcher (2) radiale Ausschnitte (23, 24) bis in die Tiefe ausgebildet sind, die mindestens dem Durchmesser der Umfangslöcher (2) gleich ist und daß jedes Umfangsloch (2) gegenüber einer der Rippen (6, 7) angeordnet ist.

**Claims**

1. Contact separating element of a vortex base in gas-liquid apparatus, comprising a nozzle (1) at the inlet end of which there is provided at least one row of circumferential holes (2), an axial cyclone (3) built into the nozzle with at least two inclined blades (5) and a separator (9) arranged at the outlet end of the nozzle (1), characterised in that in front of each inclined blade (5) of the axial cyclone (3) on the inlet side there is arranged a rib (6) extending in a straight line along the axis of the nozzle (1), and between each pair of the straight ribs (6) there is provided at least one intermediate rib (7), while the row of circumferential holes (2) is arranged in the line-up region of the straight and intermediate ribs (6, 7).

2. Contact separating element according to claim 1, characterised in that the straight ribs (6) are constructed so that its edge is adjacent to the inclined blades (5) while the edge of the intermediate ribs (7) facing the inclined blades (5) is displaced by at least the thickness of the intermediate rib (7) opposite to the edges of the straight ribs (6) adjacent to the inclined blades (5) in the direction towards the inlet end of the axial cyclone (3).

3. Contact separating element according to claim 1, characterised in that the straight ribs (6) are constructed so that its edge is adjacent to the inclined blades (5) while the edge of the intermediate ribs (7) facing the inclined blades (5) has a slope which runs at a pointed angle β to the longitudinal axis of the intermediate ribs (7) in the direction of the slope of the inclined blades.

4. Contact separating element according to claim 1, characterised in that the straight and the intermediate ribs (6, 7) are arranged at a distance from the inclined blades (5) which is not greater than one diameter of the nozzle (1).

5. Contact separating element according to any one of the claims 1 to 4, characterised in the straight and the intermediate ribs (6, 7) protrude in a radial direction essentially up to the inner surface of the nozzle (1) and have an axial length which is equal to at least a quarter of the axial length of the inclined blades (5), the straight and intermediate ribs (6, 7) being evenly distributed over the inner surface of the nozzle (1).

6. Contact separating element according to any one of the claims 1 to 4, characterised in that at the level of the circumferential holes (2) the straight and the intermediate ribs (6, 7) are provided with radial cutouts (23, 24) up to a depth which at least equals the diameter of the circumferential holes (2) and each circumferential hole (2) is arranged opposite one of the ribs (6, 7).

## Revendications

1. Elément de séparation par contact d'un fond tourbillonnant d'appareils gaz-liquide, contenant un support (1) à l'extrémité d'entrée duquel est réalisée au moins une série de trous périphériques (2), un cyclone axial (3) incorporé dans le support (1) avec au moins deux aubes inclinées (5) et un séparateur (9) agencé à l'extrémité de sortie du support (1), caracterisé en ce que, devant chaque aube inclinée (5) du cyclone axial (3), est agencée, côte entrée, une nervure rectiligne (6) passant le long de l'axe du support (1) et entre chaque paire de nervures rectilignes (6) est prévue au moins une nervure intermediaire (7) tandis que la série de trous périphériques (2) est réalisée dans la zone où sont disposées les nervures rectilignes et intermédiaires (6, 7).

2. Elément de séparation par contact selon la revendication 1, caractérisé en ce que les nervures rectilignes (6) sont réalisées avec leur bord butant directement contre les aubes inclinées (5) tandis que les bords des nervures intermédiaires (7) qui sont tournés vers les aubes inclinées (5) sont décalés vis-à-vis des bords des nervures rectilignes (6) qui butent contre les aubes inclinées (5), dans la direction de l'extrémité d'entrée du cyclone axial (3), au moins de l'épaisseur b de la nervure intermédiaire (7).

3. Elément de séparation par contact selon la revendication 1, caractérisé en ce que les nervures rectilignes (6) sont réalisées avec leur bord butant directement contre les aubes inclinées (5) tandis que le bord des nervures intermédiaires (7) tourné vers les aubes inclinées (5) présente un biseautage qui passe à un angle aigu β par rapport à l'axe longitudinal des nervures intermédiaires (7), en direction d'inclinaison des aubes inclinées (5).

4. Elément de séparation par contact selon la revendication 1, caracterisé en ce que les nervures rectilignes et les nervures intermédiaires (6, 7) sont agencées à une distance des aubes inclinées (5) qui n'est pas plus grande que le diamètre du support (1).

5. Elément de séparation par contact selon l'une des revendications 1 à 4, caractérisé en ce que les nervures rectilignes intermédiaires (6, 7) dépassent en direction radiale en principe jusqu'à la surface interne du support (1) et ont une longueur axiale qui est au moins égale au quart de la longueur axiale des aubes inclinées (5), ainsi les nervures rectilignes et intermédiaires (6, 7) sont régulièrement réparties sur la surface interne du support (1).

6. Elément de séparation par contact selon l'une quelconque des revendications 1 à 4, caractérisé en ce que des entailles radiales (23, 24) sont formées sur les nervures rectilignes et intermédiaires (6, 7) à la hauteur des trous périphériques (2), à une profondeur qui est au moins égale au diamètre des trous périphériques (2) et en ce que chaque trou périphérique (2) est agencé face à l'une des nervures (6, 7).

FIG.1

FIG.2

FIG.3

FIG.4

FIG.5

FIG.6

FIG.7